(19) Europäisches Patentamt
European Patent Office
Office européen des brevets

(11) EP 0 452 755 B1

(12) **EUROPÄISCHE PATENTSCHRIFT**

(45) Veröffentlichungstag und Bekanntmachung des Hinweises auf die Patenterteilung:
**22.05.1996 Patentblatt 1996/21**

(51) Int Cl.6: **C07F 9/6568**

(21) Anmeldenummer: **91105457.5**

(22) Anmeldetag: **06.04.1991**

(54) **Kontinuierliches Verfahren zur Herstellung von 1-Halogen-1-oxophospholenen**

Continuous process for the preparation of 1-halogen-1-oxophospholenes

Procédé de préparation en continu de 1-halogène-1-oxophospholènes

(84) Benannte Vertragsstaaten:
**CH DE FR GB IT LI NL**

(30) Priorität: **19.04.1990 DE 4012489**

(43) Veröffentlichungstag der Anmeldung:
**23.10.1991 Patentblatt 1991/43**

(73) Patentinhaber: **BAYER AG**
**51368 Leverkusen (DE)**

(72) Erfinder:
- **Fröhlen, Hans Günter**
  **W-5090 Leverkusen 3 (DE)**
- **Block, Hans-Dieter, Dr.**
  **W-5090 Leverkusen 3 (DE)**

(56) Entgegenhaltungen:
**DE-A- 1 956 187** **DE-A- 2 919 754**

- **Chemical abstracts band 69, 1.Juli-22.Juli 1968, Columbus Ohio, USA N.K. Bliznyuk et al: 1 Chloro-1oxophosphacyclopentanes and some synthesis based on them"Seiten 293-294, Zusammenfassung Nr. 2 985y**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 452 755 B1

Printed by Jouve, 75001 PARIS (FR)

## Beschreibung

Die Erfindung betrifft ein Verfahren zur Herstellung von 1-Halogen-1-oxophospholenen durch kontinuierliche Umsetzung von Alkoxydihalogenphosphanen mit 1,3-Dienen.

1-Halogen-1-oxophospholene der allgemeinen Formel

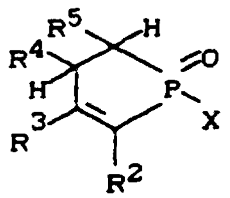 , 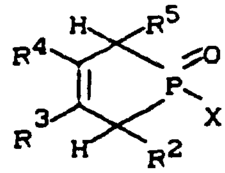 oder 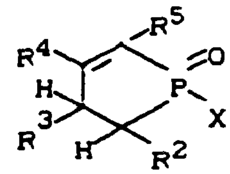

in denen die Reste $R^2$, $R^3$, $R^4$ und $R^5$ unabhängig voneinander Wasserstoff, Chlor, Brom oder gegebenenfalls mit Chlor oder Brom substituierte ($C_1$-$C_4$)-Alkylreste sein können und X Chlor oder Brom bedeutet, sind wichtige Ausgangsverbindungen z.B. für Substanzen, die als flammhemmende Verbindungen in halogenfreien Kunststoffsystemen, als Carbodiimidisierungskatalysatoren oder als Fungizide eingesetzt werden.

Durch den steigenden Bedarf an 1-Halogen-1-oxophospholenen ist die Bereitstellung von technischen Mengen dieser Verbindungen unumgänglich geworden. Die bisherigen, bekannten Synthesewege haben jedoch verschiedene Nachteile, so daß größere Mengen bisher kaum oder nur sehr unvorteilhaft hergestellt werden konnten.

So wird in der DE-PS 1 191 204 zum Beispiel die direkte Addition von Phosphortrihalogeniden an 1,3-Diene zu Trihalogenphospholenen beschrieben, welche anschließend mit sauerstoffspendenden Substanzen wie Wasser, Alkoholen, Ketonen, Orthocarbonyl-Verbindungen usw. zu 1-Halogen-1-oxophospholenen umgesetzt werden. Aufgrund der mehrtägigen Reaktionszeiten, der Mehrstufigkeit und der schlechten Ausbeuten ist dieses Verfahren jedoch sehr unbefriedigend.

Ein anderes Verfahren geht von Phosphorigsäuremonoesterdichloriden aus, die in einem Autoklaven an 1,3-Diene addiert werden und dann in 1-Halogen-1-oxophospholene und Alkylhalogenide bzw. Alkylendihalogenide gespalten werden [B.A. Arbusov A.O. Vizel, Y.Y. Samitov und Y.F. Tarenko, Izv, Akad, Nauk. SSSR, Ser. Khim (1967) (3), 648; N.A. Razumova, L.J. Zubtsova und A.A. Petrov, Zh. Obsh. Khim. 40 (12), 2554, (1969)]. Die Reaktionszeiten können durch Zusatz von Phosphortrihalogeniden in gewissen Grenzen verkürzt werden [N.N. Bliznyuk, Z.N. Kvasha und A. F. Kolomiets, Zh. Obshch. Khim. 37, 1811 (1967)], doch werden auch dadurch noch keine wirtschaftlich vertretbaren, kurzen Reaktionszeiten erreicht.

Aufgabe war es daher, ein Verfahren zur Verfügung zu stellen, das die wirtschaftliche Herstellung von größeren Mengen an 1-Halogen-1-oxophospholenen erlaubt, bei dem die oben bereits erwähnten Nachteile der bekannten Verfahren wie lange Reaktionszeiten, geringe Ausbeuten und Polymerisation der Dienkomponente nicht auftreten und welches eine einfache Handhabung gestattet.

Diese Aufgabe konnte mit dem erfindungsgemaßen Verfahren gelöst werden.

Gegenstand der Erfindung ist ein Verfahren zur Herstellung von 1-Halogen-1-oxophospholenen durch Umsetzung von Phosphorigsäuremonoalkylesterdihalogeniden mit 1,3-Dienen, wobei die Umsetzung einstufig unter Druck bei erhöhter Temperatur mit Phosphortrihalogeniden als Lösungsmittel kontinuierlich durchgeführt wird.

Die kontinuierliche Umsetzung von Phosphortrihalogeniden, Trialkylphosphiten und 1,3-Dienen geschieht in überschüssigem Phosphortrihalogenid, wobei die aus den Phosphortrihalogeniden mit den Trialkylphosphiten gebildeten Zwischenprodukte (Alkoxydihalogenphosphane) nicht isoliert werden.

Das Phosphortrihalogenid wird dabei bevorzugt in einem Überschuß von 75 bis 125 % eingesetzt.

Die Zwischenprodukte (Alkoxydihalogenphosphane) entstehen dabei nach folgenden Schema :

$$2\ PX_3 + P(OR^1)_3 \xrightarrow[\text{Lösungsmittel}]{PX_3\ \text{als}} 3\ R^1OPX_2$$

wobei X für Chlor oder Brom steht und $R^1$ für einem ($C_1$-$C_5$)-Alkylrest steht.

Die Reaktion zwischen Alkoxydihalogenphosphanen und 1,3-Dienen wird durch das nachfolgende Schema verdeutlicht:

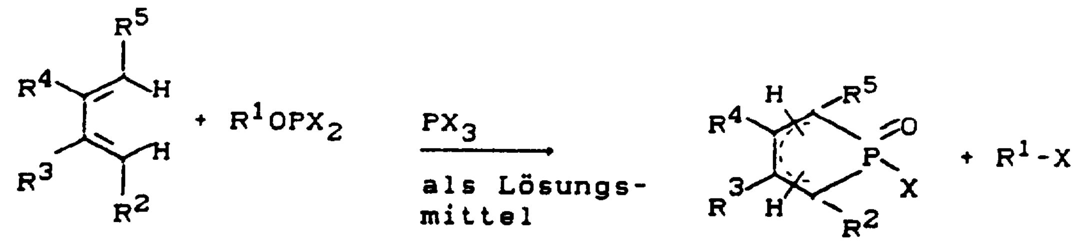


wobei $R^2$, $R^3$, $R^4$ und $R^5$ unabhängig voneinander Wasserstoff, $(C_1\text{-}C_4)$-Alkyl, vorzugsweise $(C_1\text{-}C_2)$-Alkyl, gegebenenfalls substituiert mit Chlor und/oder Brom sein können.

Die meisten isomerenreinen 1-Halogen-1-oxophospholene liegen bei Raumtemperatur in kristalliner Form vor, wodurch ihre Handhabbarkeit im Normalfall erschwert wird. Unter den erfindungsgemäßen Synthesebedingungen wird dagegen stets ein Isomerengemisch von 1-Halogen-1-oxophospholen-3 und 1-Halogen-1-oxophospholen-2 in zumeist flüssiger Form erhalten.

Als Phosphortrihalogenide können für das erfindungsgemäße Verfahren Phosphortrichlorid oder Phosphortribromid eingesetzt werden.

Die als Zwischenprodukte einzusetzenden Alkoxydihalogenphosphane der allgemeinen Formel

$$R^1OPX_2 ,$$

in welcher der Rest $R^1$ ein $(C_1\text{-}C_5)$-Alkylrest und X für Chlor oder Brom steht, können nach bekannten nicht erfindungsgemäßen Methoden z.B. aus Phosphortrihalogeniden und Alkoholen und Abziehen des gebildeten Chlorwasserstoffs im Vakuum hergestellt werden. Weitere bekannte Verfahren zu ihrer Herstellung sind in Houben-Weyl, Methoden der Organischen Chemie, Band 12/2, S. 12 ff. sowie Erweiterungs- und Folgeband E 1, S. 352 ff. zu finden.

Die im erfindungsgemäßen Verfahren zu verwendenden Trialkylphosphite der allgemeinen Formel

$$P(OR^1)_3,$$

worin $R^1$ die oben genannte Bedeutung hat, können z.B. sein: Trimethylphosphit, Triethylphosphit, Tri-isopropylphosphit, Tributylphosphit, Tripentylphosphit-, Tris-(2-ethyl-hexyl)-phosphit und Tri-2-chlorethylphosphit, wobei den niedrigsiedenden Methyl- oder Ethylderivaten der Vorzug gegeben wird. Außerdem ist die technische Verwendbarkeit der als Nebenprodukte bei der Umsetzung mit Phosphortrihalogenid anfallenden Alkylhalogenide ein wichtiges Kriterium für die Auswahl der Trialkylphosphite. Im Falle der Verwendung von Methoxydichlorphosphan, hergestellt aus Phosphortrichlorid und Methanol bzw. durch Äquilibrierung von Phosphortrichlorid mit Trimethylphosphit, erhält man neben 1-Chlor-1-oxophospholen als Nebenprodukt Chlormethan, das z.B, in der Rochow-Synthese der Methylchlorsilane eingesetzt werden kann.

Als 1,3-Diene eignen sich im Prinzip alle 1,3-Diene mit der allgemeinen Formel

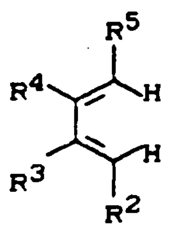

in welcher $R^2$, $R^3$, $R^4$ und $R^5$ unabhängig voneinander Wasserstoff, Chlor, Brom, $(C_1\text{-}C_4)$-Alkyl, vorzugsweise $(C_1\text{-}C_2)$-Alkyl, gegebenenfalls substituiert mit Chlor und/oder Brom sein können. Besonders geeignete 1,3-Diene sind z.B. Butadien, Isopren, Chloropren und 1-Methylbutadien. Besonders bevorzugt sind Butadien und Isopren.

Die Reaktionsgemische können zusätzlich mit im Reaktionsgemisch löslichen Polymerisationsinhibitoren wie z. B. Phenothiazin, Hydrochinon, p-tert.-Butylbrenzkatechin usw. in Mengen bis zu 1 Gew.-% versetzt werden [Houben-Weyl, Methoden der Organischen Chemie, Band 14/1, S. 26 ff].

Das erfindungsgemäße Verfahren wird bevorzugt in einem Temperaturbereich zwischen 50°C und 180°C durchgeführt, wobei der Bereich zwischen 100°C und 150°C besonders bevorzugt ist.

Die Reaktionszeiten sind abhängig von den angewendeten Temperaturen. Für den bevorzugten Temperaturbereich liegen sie im allgemeinen zwischen 15 Minuten und 2 Stunden, insbesondere zwischen 30 Minuten und 1 Stunde.

Die Durchführung des erfindungsgemäßen Verfahrens kann z.B. in folgender Weise erfolgen:

Mittels Dosierpumpen werden die Einsatzstoffe in ein kühlbares Mischgefäß dosiert, das gleichzeitig auch als Vorlage für eine druckfeste Dosierpumpe dient, mit der das Reaktionsgemisch in eine beheizbare Druckschleife gefördert wird. Ein Ventil, am Ende der Druckschleife angebracht, sorgt für die Aufrechterhaltung des jeweils erforderlichen Drucks im Inneren der Schleife. Dieser Druck entspricht dem Dampfdruck der flüchtigen Komponenten bei der betreffenden Reaktionstemperatur. Der Austrag der Reaktionsprodukte erfolgt ebenfalls über das o.g. Ventil.

Durch bekannte Methoden, wie z.B. Destillation unter vermindertem Druck, wird das 1-Halogen-1-oxophospholen vom Lösungsmittel Phosphortrihalogenid und dem als Nebenprodukt entstandenen Halogenalkan befreit.

Die weitere Reinigung des 1-Halogen-1-oxophospholens kann ebenfalls durch Destillation unter vermindertem Druck durchgeführt werden.

Die Erfindung soll anhand der folgenden Beispiele näher erläutert werden.

<u>Beispiel 1</u>

Kontinuierliche Herstellung eines Isomerengemisches von 1-Chlor-3-methyl-1-oxophospholenen

In ein mit Wasser gekühltes Mischgefäß werden pro Stunde 275 g (4 Mol) Isopren, 917 g (6,67 Mol) Phosphortrichlorid und 165 g (1,33 Mol) Trimethylphosphit eindosiert. Die Temperatur im Mischgefäß beträgt 18°C. Eine druckfeste Pumpe fördert das homogene Reaktionsgemisch (1,2 1/Stunde) in eine 700 ml fassende Reaktionsschlange, die sich in einem mit 130°C beheizten Ölbad befindet. Die mittlere Verweilzeit beträgt 35 Minuten. Der Druck innerhalb der Reaktionsschlange liegt bei 15 bar. Das Reaktionsgemisch entspannt sich unter Abkühlen beim Verlassen der Reaktionsschlange über ein Druckhalteventil und wird in einem Rohproduktbehälter gesammelt. Der größte Teil des Chlormethans entweicht hierbei, wird in einem Solekühler auskondensiert und in einem weiteren, ebenfalls mit Sole gekühlten Behälter aufgefangen. Zur Ausbeutebestimmung werden die stündlichen Durchsatzmengen herangezogen. Zwecks Austreiben des restlichen Chlormethans wird das Rohprodukt bei Normaldruck bei 80°C erhitzt. Das überschüssige Phosphortrichlorid zieht man bei 20 mbar bis zu einer Sumpftemperatur von 70°C ab. Das Phosphortrichlorid wird dabei an einem Solekühler kondensiert. Die Destillation des Rückstands (110 - 120°C bei 3 mbar) liefert 568 g (94,4 % der Theorie) an 1-Chlor-3-methyl-1-oxophospholen. Das Isomerengemisch setzt sich zusammen aus 58 % 1-Chlor-3-methyl-1-oxophospholen-3 und 42 % 1-Chlor-3-methyl-1-oxophospholen-2. Die Ausbeute an Chlormethan beträgt 196 g (97 % der Theorie).

<u>Beispiel 2</u> (nicht erfindungsgemäß)

Im Beispiel 2 wird wie in Beispiel 1 verfahren. Zum Einsatz kommt hier Methoxydichlorphosphan, das zuvor in einer separaten Apparatur nach bekannter Methode aus Phosphortrichlorid und Methanol hergestellt wurde und schon die für die weitere Umsetzung notwendige Phosphortrichlorid-Überschußmenge als Lösungsmittel enthält.

In den gekühlten Mischtopf werden pro Stunde eindosiert:

275 g (4 Mol) Isopren und 1082 g der zuvor hergestellten Methoxydichlorphosphan/Phosphortrichlorid-Mischung mit 4 Mol Methoxydichlorphosphan.

Umsetzung und Aufarbeitung werden wie in Beispiel 1 beschrieben ausgeführt.

Pro Stunde werden 539 g (89,5 % der Theorie) destillativ gereinigtes 1-Chlor-3-methyl-1-oxophospholen erhalten.

<u>Beispiel 3</u>

Unter analogen Bedingungen wie in Beispiel 1 werden pro Stunde umgesetzt:

275 g (4 Mol) Isopren, 917 g (6,67 Mol) Phosphortrichlorid und 221 g (1,33 Mol) Triethylphosphit.

Der Druck während der kontiniuierlichen Fahrweise beträgt 10 bar.

Zur Ausbeutebestimmung wird die in einer Stunde aufgefangene Reakionsgemisch-Menge herangezogen.

Nach Aufarbeitung durch Destillation werden 500 g (83,0 % der Theorie) eines Isomerengemisches aus 1-Chlor-3-methyl-1-oxophospholen erhalten. Es besteht zu 21,8 % aus 1-Chlor-3-methyl-1-oxophospholen-3 und zu 78,2 % aus 1-Chlor-3-methyl-1-oxophospholen-2.

An Ethylchlorid werden 238 g (92,2 % der Theorie) erhalten.

<u>Beispiel 4</u>

Unter Bedingungen wie im Beispiel 1 beschrieben werden pro Stunde 275 g (4 Mol) Isopren, 917 g (6,67 Mol) Phosphortrichlorid und 388 g (1,33 Mol) Tri-n-pentylphosphit kontinuierlich umgesetzt. Der Druck in der Reaktionsschlange beträgt 3 bar.

Zur Ausbeutebestimmung gelangt die in einer Stunde aufgefangene Menge an Reaktionsmischung zur destillativen Aufarbeitung. Danach liegen vor:

358 g (84 % der Theorie) an n-Pentylchlorid und 495 g (82,2 % der Theorie) eines Isomerengemisches, das zu 18,1 % aus 1-Chlor-3-methyl-1-oxophospholen-3 und zu 81,9 % aus 1-Chlor-3-methyl-1-oxophospholen-2 besteht.

Beispiel 5

Es wird wie in Beispiel 1 verfahren. Zum Einsatz gelangen Butadien, Phosphortrichlorid und Trimethylphosphit.

In 1 Stunde werden durchgesetzt:

216 g (4 Mol) Butadien, 917 g (6,67 Mol) Phosphortrichlorid und 165 g (1,33 Mol) Trimethylphosphit.

Basis für die Ausbeutebestimmung ist die in einer Stunde erhaltene Menge an Reaktionsmischung, die nach destillativer Aufarbeitung 494 g (90,5 %) eines Isomerengemisches ergibt, das zu 56 % aus 1-Chlor-1-oxophoopholen-3 und zu 44 % 1-Chlor-1-oxophospholen-2 besteht.

**Patentansprüche**

**1.** Verfahren zur Herstellung von 1-Halogen-1-oxophospholenen der allgemeinen Formel

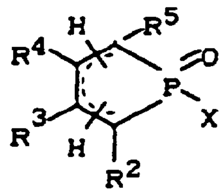

in welcher X für Chlor oder Brom steht und $R^2$, $R^3$, $R^4$ und $R^5$ unabhängig voneinander für Wasserstoff, $(C_1$-$C_4)$-Alkyl, vorzugsweise $(C_1$-$C_2)$-Alkyl, gegebenenfalls substituiert mit Chlor und/oder Brom stehen,

durch Umsetzung von Alkoxydihalogenphosphanen der allgemeinen Formel

$$R^1O\text{-}PX_2$$

in welcher der Rest $R^1$ für $(C_1$-$C_5)$-Alkyl, und X für Chlor oder Brom steht, mit 1,3-Dienen der allgemeinen Formel

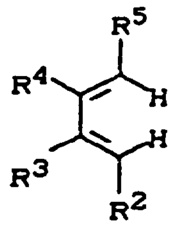

in welcher $R^2$ , $R^3$ , $R^4$ und $R^5$ die gleiche Bedeutung wie oben haben,

dadurch gekennzeichnet, daß die Umsetzung einstufig unter Druck bei Temperaturen zwischen 50° und 180° C, bevorzugt zwischen 100° und 150° C, mit Phosphortrihalogeniden als Lösungsmittel kontinuierlich durchgeführt wird und daß das einzusetzende Alkoxydihalogenphosphan $R^1$-O-$PX_2$ in situ ohne Isolierung desselben aus Trialkylphosphit der allgemeinen Formel

$$(R^1\ O)_3P$$

worin $R^1$ für $(C_1$-$C_5)$-Alkyl steht,
und dem als Lösungsmittel eingesetzten Phosphortrihalogenid erzeugt wird.

**Claims**

**1.** Process for the preparation of 1-halogen-1-oxophospholenes of the general formula

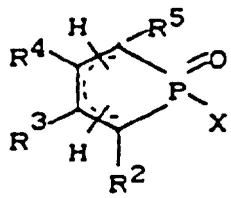

in which X stands for chlorine or bromine and $R^2$, $R^3$, $R^4$ and $R^5$ denote, independently of one another, hydrogen, $(C_1-C_4)$-alkyl, preferably $(C_1-C_2)$-alkyl, optionally substituted with chlorine and/or bromine,

by reacting alkoxydihalogen phosphanes of the general formula

$$R^1O\text{-}PX_2$$

in which the radical $R^1$ stands for $(C_1-C_5)$-alkyl and X stands for chlorine or bromine,

with 1,3-dienes of the general formula

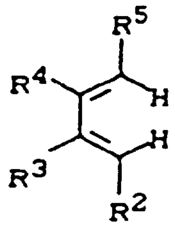

in which $R^2$,$R^3$, $R^4$ and $R^5$ denote the same as indicated above,

characterised in that the reaction is carried out in continuous manner in a single stage under pressure at temperatures of between 50°C and 180°C, preferably between 100°C and 150°C, with phosphorus trihalides as the solvent, and that the alkoxydihalogen phosphane $R^1\text{-}O\text{-}PX_2$ to be utilised is produced in situ without isolation thereof from trialkyl phosphite of the general formula

$$(R^1O)_3P$$

in which $R^1$ stands for $(C_1-C_5)$-alkyl,
and the phosphorus trihalide utilised as the solvent.

## Revendications

1. Procédé de préparation des 1-halogéno-1-oxophospholènes de formule générale :

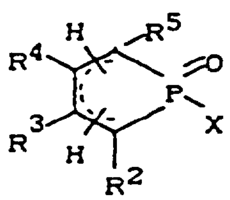

dans laquelle X représente le chlore ou le brome et $R^2$, $R^3$, $R^4$ et $R^5$ représentent chacun, indépendamment les uns des autres, l'hydrogène, un groupe alkyle en $C_1$-$C_4$, de préférence en $C_1$-$C_2$ éventuellement substitué par le chlore et/ou le brome,

par réaction d'alcoxydihalogénophosphanes de formule générale :

$$R^1O\text{-}PX_2$$

dans laquelle $R^1$ représente un groupe alkyle en $C_1$-$C_5$ et X le chlore ou le brome, avec des 1,3-diènes de formule générale :

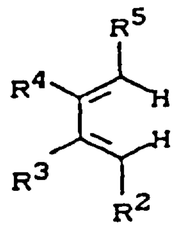

dans laquelle $R^2$, $R^3$, $R^4$ et $R^5$ ont les significations indiquées ci-dessus, caractérisé en ce que la réaction est réalisée en un seul stade sous pression à des températures de 50 à 180°C, de préférence de 100 à 150°C, en continu, avec un solvant consistant en un trihalogénure de phosphore, et en ce que l'alcoxydihalogénophosphane à mettre en oeuvre $R^1$-O-$PX_2$ est formé in situ, sans être isolé, à partir d'un phosphite de trialkyle de formule générale :

$$(R^1O)_3P$$

dans laquelle $R^1$ représente un groupe alkyle en $C_1$-$C_5$, et du trihalogénure de phosphore utilisé en tant que solvant.